# DEMANDE DE BREVET EUROPEEN

(11) **EP 4 729 416 A1**
(43) Date de publication de la demande: **22.04.2026**
(21) Numéro de dépôt: 25208755.6
(22) Date de dépôt: 15.10.2025
(51) Int. Cl.: B64D 27/40, B64C 3/18

(54) **ENSEMBLE POUR AÉRONEF COMPORTANT DES MOYENS POUR FIXER UNE AILE À UN MÂT RÉACTEUR**

(30) Priorité: 18.10.2024 FR 2411339
(71) Demandeur: AIRBUS OPERATIONS (S.A.S.), 31060 Toulouse (FR)
(72) Inventeur: GUENEAU, Germain, 31060 TOULOUSE (FR); COMBES, Pierre-Antoine, 31060 TOULOUSE (FR); DE NICOLA, Marc, 31060 TOULOUSE (FR)
(74) Mandataire: Cabinet Le Guen Maillet

(57) **Abrégé**

L'invention concerne un ensemble (1) pour aéronef comportant une ferrure supérieure (104c) fixée à une structure (104a) de l'aile de l'aéronef, une ferrure inférieure (104d) fixée à un panneau d'intrados de l'aile, un mât réacteur (106) avec deux panneaux latéraux montés articulés sur la ferrure inférieure (104d), une bielle tribord (252a) et une bielle bâbord (252b) montées articulées entre le panneau latéral (208a-b) qui est du même côté et la ferrure supérieure (104c), et un plot présentant une extrémité proximale solidaire d'une nervure arrière du mât réacteur (106) et une extrémité distale montée dans une fenêtre de la ferrure inférieure (104d) à travers une liaison linéaire annulaire.

Avec un tel ensemble, l'apparition de forces hors plan est limitée.

## Description

### DOMAINE TECHNIQUE

La présente invention concerne un ensemble pour aéronef comportant des moyens pour fixer une aile à un mât réacteur, ainsi qu'un aéronef comportant une aile et un tel ensemble.

### ÉTAT DE LA TECHNIQUE ANTÉRIEURE

Habituellement, pour un aéronef, un ensemble de propulsion comporte un turboréacteur qui est fixé sous une aile de l'aéronef à l'aide d'un mât réacteur. Le mât réacteur est généralement constitué d'une structure primaire formée d'un caisson constitué d'un longeron supérieur, d'un longeron inférieur et de deux panneaux latéraux reliant les deux longerons et de nervures internes réparties le long du caisson.

Le turboréacteur est fixé sous le mât réacteur au moyen d'attaches moteur qui comprennent classiquement, à l'avant, une attache moteur avant, à l'arrière, une attache moteur arrière, et entre les attaches moteur avant et arrière, un assemblage de reprise d'effort de poussée comprenant des bielles de reprise, fixées d'une part au turboréacteur, et d'autre part à un sabot solidaire de la structure primaire du mât, pour absorber les forces de poussée générées par le turboréacteur.

Un système de fixation lie le mât réacteur à l'aile. Ce système de fixation réagit et absorbe les moments de flexion et les efforts tranchants à l'interface du mât réacteur avec l'aile. Un exemple d'un tel arrangement est décrit dans le document US-A-2016/0221682.

Le document US-A-2005/082423 divulgue un aéronef de l'état de la technique.

Bien que de tels système de fixation donnent satisfaction, il est souhaitable de trouver des arrangements différents en particulier pour limiter l'apparition de forces hors plan dans le mât réacteur et pour élargir la surface de transfert de forces vers la structure de l'aile.

### EXPOSÉ DE L'INVENTION

Un objet de la présente invention est de proposer un ensemble pour aéronef comportant des moyens pour fixer une aile à un mât réacteur où les moyens de fixation limitent l'apparition de forces hors plan dans le mât réacteur et élargissent la surface de transfert de forces vers la structure de l'aile.

À cet effet, est proposé un ensemble pour un aéronef comportant une aile avec une structure et un panneau d'intrados, ledit ensemble présentant une direction longitudinale et un plan médian vertical et comportant :
- une ferrure supérieure destinée à être fixée à la structure de l'aile,
- une ferrure inférieure destinée à être fixée au panneau d'intrados,
- un mât réacteur présentant une structure primaire formant un caisson et comportant un panneau latéral tribord, un panneau latéral bâbord et une nervure arrière qui ferme le caisson à l'arrière, où chaque panneau latéral est monté articulé sur la ferrure inférieure,
- une bielle tribord et une bielle bâbord où une première extrémité de chaque bielle est montée articulée sur le panneau latéral qui est du même côté et où une deuxième extrémité de chaque bielle est montée articulée sur la ferrure supérieure, et
- un plot d'axe parallèle à la direction longitudinale et présentant une extrémité proximale solidaire de la nervure arrière et une extrémité distale montée dans une fenêtre de la ferrure inférieure à travers une liaison linéaire annulaire.

Avec un tel ensemble, l'apparition de forces hors plan est limitée.

Avantageusement, le plot est mobile en translation par rapport à la ferrure inférieure parallèlement à une direction verticale.

Avantageusement, l'ensemble comporte une bague qui a une surface extérieure sphérique et qui est emmanchée sur l'extrémité distale du plot, une noix qui a une surface intérieure sphérique dans laquelle la bague est logée, où de part et d'autre de la noix, la surface extérieure de la noix présente une nervure parallèle à la direction verticale, où, sur les bords de la fenêtre, la ferrure inférieure présente, pour chaque nervure, un évidement s'étendant parallèlement à la direction verticale dans laquelle ladite nervure est guidée en translation.

Avantageusement, le plot est constitué de deux demi-cylindres accolés le long d'un plan où l'extrémité proximale de chaque demi-cylindre est fixée à la nervure arrière.

Avantageusement, les deux deuxièmes extrémités des bielles sont montées articulées autour d'un même arbre d'articulation.

Avantageusement, ledit arbre d'articulation est constitué d'un arbre périphérique qui est cylindrique et creux et d'un arbre intérieur qui est emmanché dans l'arbre périphérique.

Selon un mode de réalisation particulier, la ferrure inférieure est constituée d'une pièce bâbord et d'une pièce tribord fixées l'une à l'autre le long du plan médian vertical, et où chaque pièce est fixée au panneau latéral qui est du même côté et destinée à être fixée au panneau d'intrados. Selon un mode de réalisation particulier, la ferrure inférieure est constituée d'une pièce inférieure bâbord, d'une pièce inférieure tribord, d'une pièce supérieure bâbord et d'une pièce supérieure tribord, où les pièces tribord sont fixées l'une à l'autre, où les pièces bâbord sont fixées l'une à l'autre, où les pièces tribord et les pièces bâbord sont fixées les unes aux autres le long du plan médian vertical, où chaque pièce inférieure est fixée au panneau latéral qui est du même côté et où chaque pièce supérieure est destinée à être fixée au panneau d'intrados.

L'invention propose également un aéronef comportant une aile avec une structure et un panneau d'intrados, un turboréacteur et un ensemble selon l'une des variantes précédentes, où la ferrure supérieure est fixée à la structure de l'aile, où la ferrure inférieure est fixée au panneau d'intrados et où le turboréacteur est fixé sous le mât réacteur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une vue en perspective et de côté d'un ensemble selon l'invention,
Fig. 3 est une vue en perspective et de côté de l'ensemble selon l'invention,
Fig. 4 est une vue en perspective d'un détail de réalisation de l'ensemble selon l'invention,
Fig. 5 montre le détail de la Fig. 4 vu en coupe par le plan V,
Fig. 6 est une vue éclatée de certains éléments du détail de la Fig. 4, et
Fig. 7 est une vue en perspective et de face d'une partie de l'ensemble selon l'invention.

### EXPOSÉ DÉTAILLÉ DE MODES DE RÉALISATION

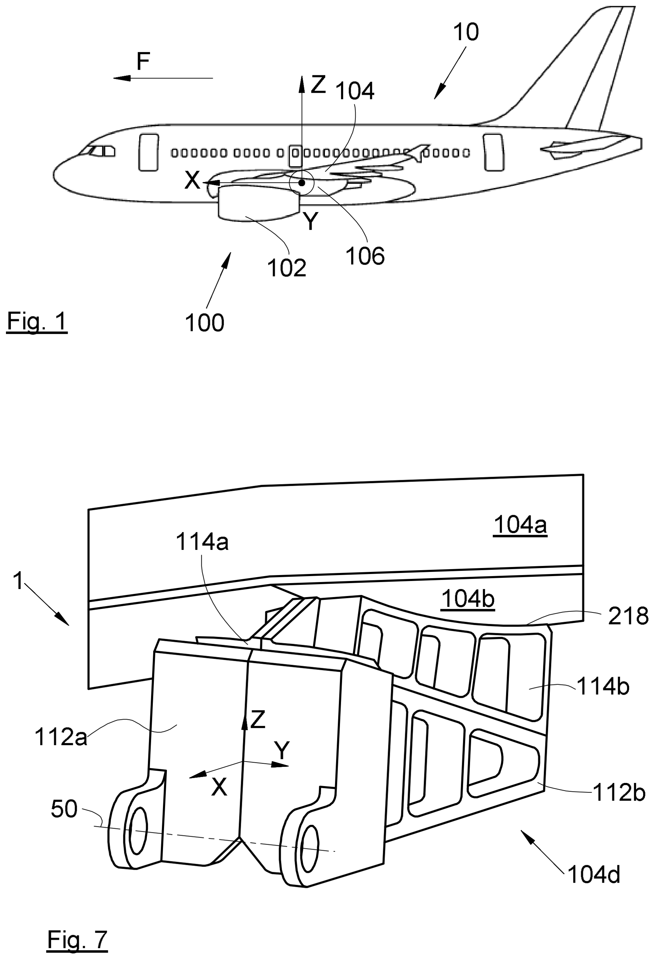

La Fig. 1 montre un aéronef 10 qui comporte un système de propulsion 100 avec un turboréacteur 102 lié à une aile 104 de l'aéronef 10 par l'intermédiaire d'un mât réacteur 106. Le mât réacteur 106 et les moyens de fixation décrits ci-dessous qui assurent la fixation du mât réacteur 106 à l'aile 104 forment un ensemble selon l'invention. Le turboréacteur 102 est fixé sous le mât réacteur 106.

Dans la description qui suit, les termes relatifs à une position sont pris en référence à un aéronef en position normale de vol, c'est-à-dire comme il est représenté sur la Fig. 1 et les positions « avant » et « arrière » sont prises par rapport à l'avant et l'arrière du turboréacteur et par rapport à la direction d'avancement F de l'aéronef 10 lorsque le turboréacteur 102 fonctionne.

Dans la description qui suit, et par convention, on appelle X, la direction longitudinale de l'ensemble qui est parallèle à l'axe longitudinal du turboréacteur, on appelle Y la direction transversale qui est horizontale lorsque l'aéronef est au sol, et Z la direction verticale qui est verticale lorsque l'aéronef est au sol, ces trois directions X, Y et Z étant orthogonales entre elles. Le turboréacteur 102 présente une forme de révolution autour de son axe longitudinal.

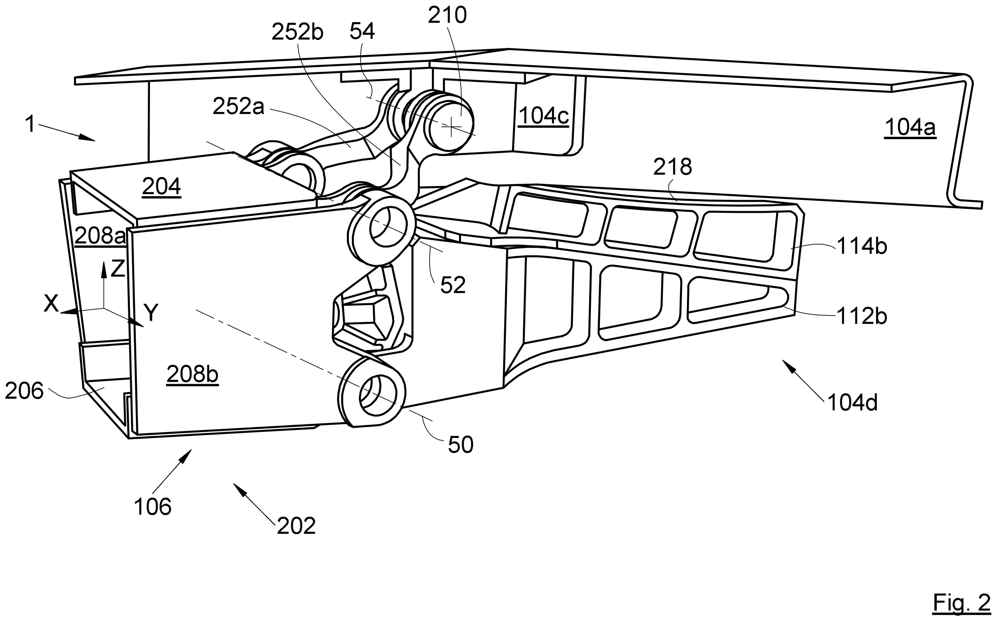

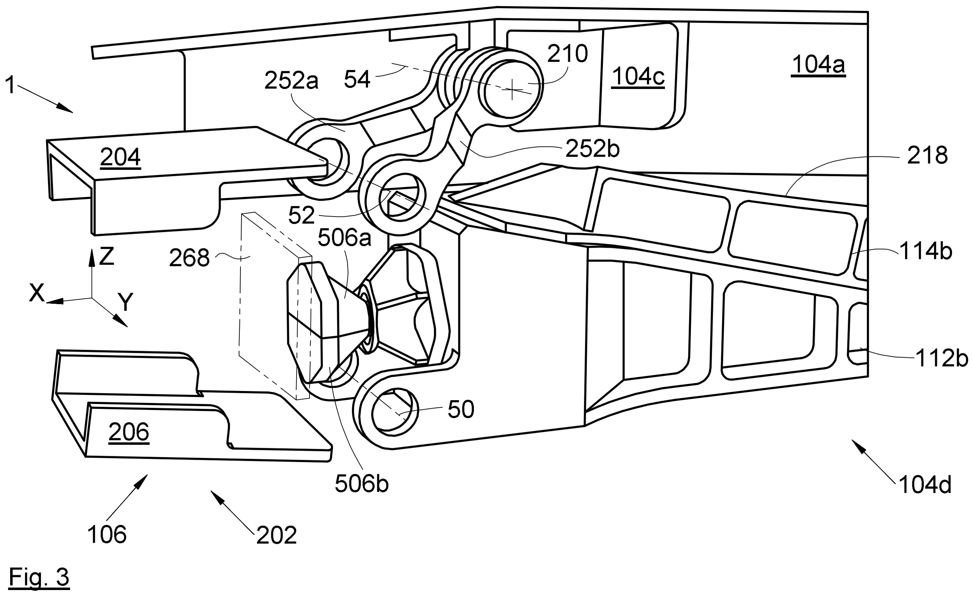

Comme le montrent la Fig. 2 et la Fig. 3, l'aile 104 présente une structure 104a qui est rigide et prend ici la forme de longerons s'étendant le long de la direction transversale Y. L'aile 104 présente également un panneau d'intrados (104b, Fig. 7) qui recouvre au moins en partie la partie inférieure de la structure 104a. Classiquement, l'aile 104 comporte également un panneau d'extrados qui recouvre au moins en partie la partie supérieure de la structure 104a.

L'ensemble 1 comporte également une ferrure supérieure 104c qui est fixée à la structure 104a de l'aile 104 et une ferrure inférieure 104d qui est fixée au panneau d'intrados 104b et plus particulièrement sous le panneau d'intrados 104b. Ces fixations sont assurées par tous moyens appropriés comme des boulons, des points de soudure, ...

En particulier, les fixations de la ferrure inférieure 104d au panneau d'intrados 104b assurent un transfert des efforts en X, Y et Z.

La ferrure supérieure 104c prend la forme d'un coin fixé à un longeron de la structure 104a de l'aile 104 et plus particulièrement au longeron avant.

La ferrure inférieure 104d prend la forme d'une poutre qui s'étend le long de la direction longitudinale X et comme le montre la Fig. 7, elle présente une face supérieure 218 arquée pour épouser au mieux la forme du panneau d'intrados 104b.

La ferrure supérieure 104c est au-dessus de la ferrure inférieure 104d.

Le mât réacteur 106 comprend une structure rigide 202 formant un caisson et également appelée structure primaire. La structure primaire 202 est formée d'un longeron supérieur 204, d'un longeron inférieur 206, ainsi que d'un panneau latéral tribord 208a et d'un panneau latéral bâbord 208b reliant les deux longerons 204 et 206. La structure primaire 202 peut également comporter des nervures internes réparties à l'intérieur de la structure primaire 202 et liées aux longerons 204 et 206 et aux panneaux latéraux 208a-b. La structure primaire 202 comporte également une nervure arrière 268 qui ferme le caisson à l'arrière et qui est globalement perpendiculaire à la direction longitudinale X.

La structure primaire 202 est globalement symétrique par rapport à un plan médian XZ de l'ensemble 1 qui s'étend verticalement.

La structure primaire 202 soutient le turboréacteur 102 par l'intermédiaire d'attaches moteur qui peuvent être de conception conventionnelle telles que celles divulguées dans le document US-A-2016/0221682.

La fixation en cascade du turboréacteur 102 au mât réacteur 106 puis à la structure 104a de l'aile 104 assure le transfert des efforts du turboréacteur 102 vers l'aile 104.

La fixation du mât réacteur 106 à l'aile 104 est assurée entre autres par le fait que chaque panneau latéral 208a-b est monté articulé sur la ferrure inférieure 104d. Chacune des deux articulations prend ici la forme d'une rotation autour d'un même premier axe d'articulation 50 qui est perpendiculaire au plan médian vertical XZ et donc parallèle à la direction transversale Y. Ces articulations assurent le transfert des efforts en Z et en X.

Chaque articulation d'un panneau latéral 208a-b à la ferrure inférieure 104d est réalisée ici par un arbre inférieur (non représenté) qui traverse un alésage dudit panneau latéral 208a-b et un alésage de la ferrure inférieure 104d. Il y a ainsi deux arbres inférieurs disposés de part et d'autre du plan médian vertical XZ et ces deux articulations sont redondantes l'une avec l'autre, c'est-à-dire que si l'une d'elle présente des défaillances, le chemin de force passe par l'autre.

La fixation du mât réacteur 106 à l'aile 104 est également assurée par une bielle tribord 252a et une bielle bâbord 252b qui sont également disposées de part et d'autre du plan médian vertical XZ. Une première extrémité de chaque bielle 252a-b est montée articulée sur le panneau latéral 208a-b qui est du même côté et une deuxième extrémité de chaque bielle 252a-b est montée articulée sur la ferrure supérieure 104c. Chaque articulation des deux premières extrémités prend ici la forme d'une rotation autour d'un même deuxième axe d'articulation 52 qui est perpendiculaire au plan médian vertical XZ et donc parallèle à la direction transversale Y.

Chaque articulation des deux deuxièmes extrémités prend ici la forme d'une rotation autour d'un même troisième axe d'articulation 54 qui est perpendiculaire au plan médian vertical XZ et donc parallèle à la direction transversale Y.

Ces articulations assurent le transfert des efforts en Z et en X.

Chaque articulation d'une première extrémité au panneau latéral 208a-b est réalisée ici par un arbre supérieur (non représenté) qui traverse un alésage de ladite première extrémité et un alésage dudit panneau latéral 208a-b. Il y a ainsi deux arbres supérieurs disposés de part et d'autre du plan médian vertical XZ et ces deux articulations sont redondantes l'une avec l'autre, c'est-à-dire que si l'une d'elle présente des défaillances, le chemin de force passe par l'autre.

Ici, chaque première extrémité constitue une chape femelle dans laquelle s'emmanche une chape mâle du panneau latéral 208a-b considéré.

Chaque articulation d'une deuxième extrémité à la ferrure supérieure 104c est réalisée ici par un arbre d'articulation 210 qui traverse un alésage de ladite deuxième extrémité et un alésage de la ferrure supérieure 104c. Dans le mode de réalisation de l'invention présenté ici, il y a un seul et même arbre d'articulation 210 pour les deux deuxièmes extrémités des bielles 252a-b.

Pour des raisons de redondance, l'arbre d'articulation 210 peut être constitué d'un arbre périphérique qui est cylindrique et creux et d'un arbre intérieur qui est emmanché dans l'arbre périphérique. Ainsi en cas de défaillance de l'arbre périphérique, l'arbre intérieur peut prendre le relais.

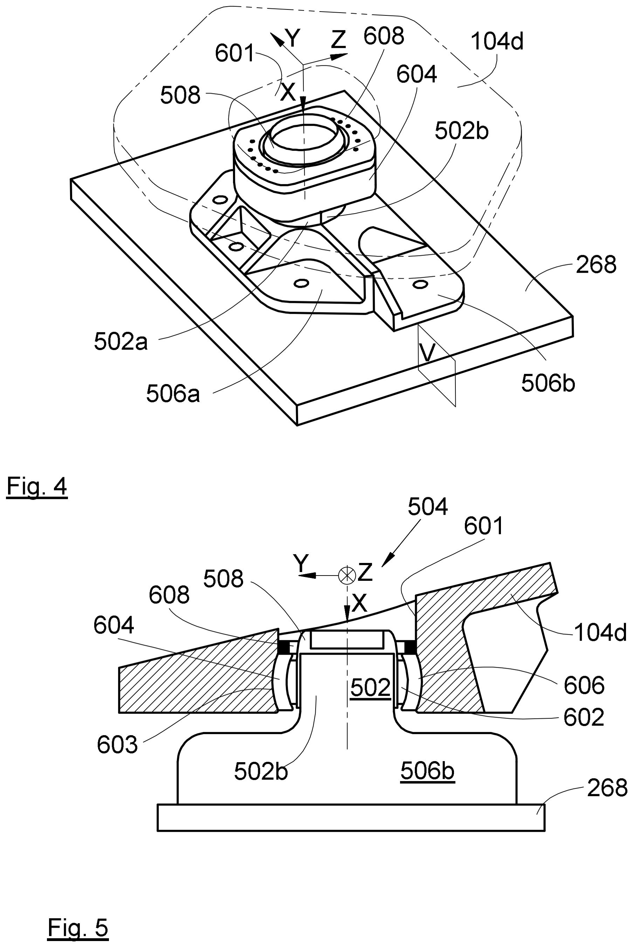

La fixation du mât réacteur 106 à l'aile 104 est également assurée par un plot 502 (Figs. 4 et 5) sous la forme d'un cylindre droit dont l'axe est parallèle à la direction longitudinale X. Le plot 502 présente une extrémité proximale solidaire de la nervure arrière 268 et une extrémité distale montée dans une fenêtre 601 de la ferrure inférieure 104d à travers une liaison linéaire annulaire 504, c'est-à-dire que le plot 502 est monté dans la fenêtre 601 à travers une liaison rotule et le plot 502 est également mobile en translation par rapport à la ferrure inférieure 104d parallèlement à la direction longitudinale X.

Le plot 502 se projette vers l'arrière depuis la nervure arrière 268.

Un tel arrangement limite l'apparition de forces hors plan dans le mât réacteur et élargit la surface de transfert de forces vers la structure de l'aile.

Selon un arrangement particulier, le plot 502 est également mobile en translation par rapport à la ferrure inférieure 104d parallèlement à une direction verticale Z. Cet arrangement assure le transfert des efforts en Y mais évite de récupérer les efforts en Z, ce qui limite un hyperstatisme inutile et l'apparition de moments.

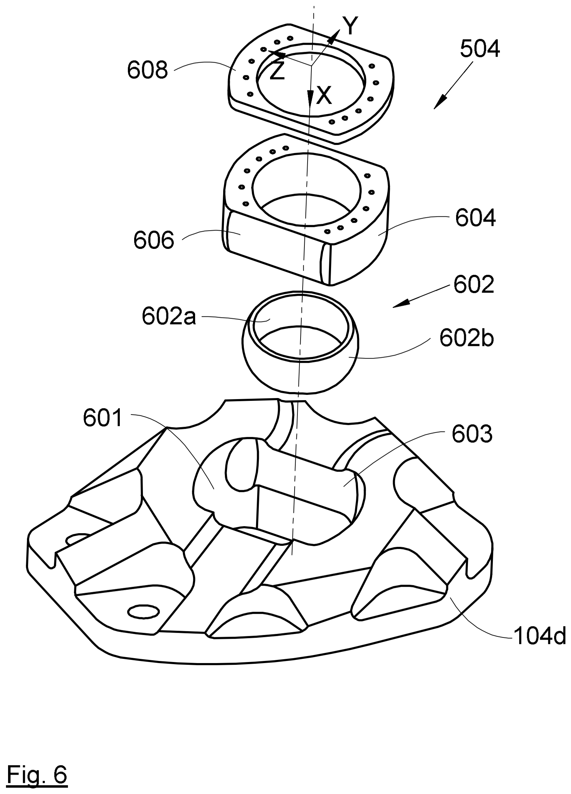

Les Figs. 4 à 6 montrent un mode de réalisation de la liaison entre le plot 502 et la ferrure inférieure 104d.

L'ensemble 1 comporte une bague 602 qui est percée d'un alésage central 602a qui est emmanché sur l'extrémité distale du plot 502 et où le plot 502 est mobile en translation dans ledit alésage central 602a parallèlement à la direction longitudinale X. Par ailleurs, la bague 602 présente une surface extérieure 602b qui est sphérique.

L'ensemble 1 comporte également une noix 604 dont la surface intérieure est sphérique et dans laquelle la bague 602 est logée. La bague 602 est ainsi mobile en rotation dans la noix 604.

Ici, l'ensemble 1 présente également une plaque de blocage 608 qui est fixée à la noix 604, par exemple par vis, et qui bloque la rotation de la noix 604 par rapport à la ferrure inférieure 104d. La bague 602, la noix 604 et la plaque de blocage 608 sont logées dans la fenêtre 601 de la ferrure inférieure 104d dont la forme est adaptée.

Pour assurer la translation du plot 502 parallèlement à une direction verticale Z, la noix 604 présente sur sa surface extérieure deux nervures 606 qui sont de part et d'autre de la noix 604 par rapport au plan médian vertical XZ. Chaque nervure 606 est parallèle à la direction verticale Z et prend ici la forme d'une portion de cylindre.

Sur les bords de la fenêtre 601, la ferrure inférieure 104d présente pour chaque nervure 606, un évidement 603 qui s'étend parallèlement à la direction verticale Z et dans laquelle ladite nervure 606 est guidée en translation.

Pour des raisons de redondance, le plot 502 est constitué ici de deux demi-cylindres 502a-b qui sont de part et d'autre d'un plan XY perpendiculaire à la direction verticale Z. les deux demi-cylindres 502a-b sont ainsi accolés le long dudit plan XY et l'extrémité proximale de chaque demi-cylindre 502a-b est fixée à la nervure arrière 268, ici par l'intermédiaire d'un sabot 506a-b fixé par exemple par des éléments de visserie à la nervure arrière 268. Ainsi en cas de rupture de l'un ou l'autre des demi-cylindres 502a-b, l'autre prend le relais.

Pour maintenir les deux demi-cylindres 502a-b accolés, l'extrémité distale du plot 502 est recouverte d'un manchon 508.

Selon un mode de réalisation particulier, représenté plus particulièrement à la Fig. 7, la ferrure inférieure 104d est constituée d'une pièce inférieure bâbord 112b, d'une pièce inférieure tribord 112a, d'une pièce supérieure bâbord 114b et d'une pièce supérieure tribord 114a. Les pièces inférieures 112a-b sont symétriques l'une de l'autre par rapport au plan médian vertical XZ et sont accolées l'une à l'autre le long de ce plan médian vertical XZ. De la même manière, les pièces supérieures 114a-b sont symétriques l'une de l'autre par rapport au plan médian vertical XZ et sont accolées l'une à l'autre le long de ce plan médian XZ.

Les pièces bâbord 112a et 114a sont fixées l'une à l'autre et les pièces tribord 112b et 114b sont fixées l'une à l'autre. Enfin, les pièces bâbord 112a et 114a et les pièces tribord 112b et 114b sont fixées les unes aux autres le long du plan médian vertical XZ. Toutes ces fixations sont assurées par des moyens appropriés comme des éléments de visseries.

En outre, chaque pièce inférieure 112a-b est fixée au panneau latéral 208a-b qui est du même côté et chaque pièce supérieure 114a-b est fixée au panneau d'intrados 104b.

Ainsi, en cas de rupture de l'un ou l'autre de ces pièces, les efforts continuent à être transférés à travers les autres pièces.

Dans un mode de réalisation non représenté, la redondance est réduite. La pièce inférieure bâbord 112b et la pièce supérieure bâbord 114b sont une seule et même pièce et forment une pièce bâbord et de la même manière, la pièce inférieure tribord 112a et la pièce supérieure tribord 114a sont une seule et même pièce et forment une pièce tribord. La ferrure inférieure 104d est alors constituée de la pièce bâbord et de la pièce tribord qui sont symétriques l'une de l'autre par rapport au plan médian vertical XZ et sont accolées l'une à l'autre le long de ce plan médian XZ. Les pièces bâbord et tribord sont fixées l'une à l'autre le long du plan médian vertical XZ, et chaque pièce est fixée au panneau latéral 208a-b qui est du même côté et au panneau d'intrados 104b.

## Revendications

1. Ensemble (1) pour un aéronef (10) comportant une aile (104) avec une structure (104a) et un panneau d'intrados (104b), ledit ensemble (1) présentant une direction longitudinale (X) et un plan médian vertical (XZ) et comportant :
- une ferrure supérieure (104c) destinée à être fixée à la structure (104a) de l'aile (104),
- une ferrure inférieure (104d) destinée à être fixée au panneau d'intrados (104b),
- un mât réacteur (106) présentant une structure primaire (202) formant un caisson et comportant un panneau latéral tribord (208a), un panneau latéral bâbord (208b) et une nervure arrière (268) qui ferme le caisson à l'arrière, où chaque panneau latéral (208a-b) est monté articulé sur la ferrure inférieure (104d), et
- une bielle tribord (252a) et une bielle bâbord (252b) où une première extrémité de chaque bielle (252a-b) est montée articulée sur le panneau latéral (208a-b) qui est du même côté et où une deuxième extrémité de chaque bielle (252a-b) est montée articulée sur la ferrure supérieure (104c),
ledit ensemble (1) étant **caractérisé en ce qu'**il comporte en outre un plot (502) d'axe parallèle à la direction longitudinale (X) et présentant une extrémité proximale solidaire de la nervure arrière (268) et une extrémité distale montée dans une fenêtre (601) de la ferrure inférieure (104d) à travers une liaison linéaire annulaire (504).

2. Ensemble (1) selon la revendication 1, **caractérisé en ce que** le plot (502) est mobile en translation par rapport à la ferrure inférieure (104d) parallèlement à une direction verticale (Z).

3. Ensemble (1) selon la revendication 2, **caractérisé en ce qu'**il comporte une bague (602) qui a une surface extérieure (602b) sphérique et qui est emmanchée sur l'extrémité distale du plot (502), une noix (604) qui a une surface intérieure sphérique dans laquelle la bague (602) est logée, où de part et d'autre de la noix (604), la surface extérieure de la noix (604) présente une nervure (606) parallèle à la direction verticale (Z), où, sur les bords de la fenêtre (601), la ferrure inférieure (104d) présente, pour chaque nervure (606), un évidement (603) s'étendant parallèlement à la direction verticale (Z) dans laquelle ladite nervure (606) est guidée en translation.

4. Ensemble (1) selon l'une des revendications 1 à 3, **caractérisé en ce que** le plot (502) est constitué de deux demi-cylindres (502a-b) accolés le long d'un plan (XY) où l'extrémité proximale de chaque demi-cylindre (502a-b) est fixée à la nervure arrière (268).

5. Ensemble (1) selon l'une des revendications 1 à 4, **caractérisé en ce que** les deux deuxièmes extrémités des bielles (252a-b) sont montées articulées autour d'un même arbre d'articulation (210).

6. Ensemble (1) selon la revendication 5, **caractérisé en ce que** ledit arbre d'articulation (210) est constitué d'un arbre périphérique qui est cylindrique et creux et d'un arbre intérieur qui est emmanché dans l'arbre périphérique.

7. Ensemble (1) selon l'une des revendications 1 à 6, **caractérisé en ce que** la ferrure inférieure (104d) est constituée d'une pièce bâbord et d'une pièce tribord fixées l'une à l'autre le long du plan médian vertical (XZ), et où chaque pièce est fixée au panneau latéral (208a-b) qui est du même côté et destinée à être fixée au panneau d'intrados (104b).

8. Ensemble (1) selon l'une des revendications 1 à 6, **caractérisé en ce que** la ferrure inférieure (104d) est constituée d'une pièce inférieure bâbord (112b), d'une pièce inférieure tribord (112a), d'une pièce supérieure bâbord (114b) et d'une pièce supérieure tribord (114a), où les pièces tribord (112a, 114a) sont fixées l'une à l'autre, où les pièces bâbord (112b, 114b) sont fixées l'une à l'autre, où les pièces tribord (112a, 114a) et les pièces bâbord (112b, 114b) sont fixées les unes aux autres le long du plan médian vertical (XZ), où chaque pièce inférieure (112a-b) est fixée au panneau latéral (208a-b) qui est du même côté et où chaque pièce supérieure (114a-b) est destinée à être fixée au panneau d'intrados (104b).

9. Aéronef (10) comportant une aile avec une structure (104a) et un panneau d'intrados (104b), un turboréacteur (102) et un ensemble (1) selon l'une des revendications précédentes, où la ferrure supérieure (104c) est fixée à la structure (104a) de l'aile (104), où la ferrure inférieure (104d) est fixée au panneau d'intrados (104b) et où le turboréacteur (102) est fixé sous le mât réacteur (106).
